# EUROPÄISCHE PATENTANMELDUNG

(11) **EP 4 059 744 A1**
(43) Veröffentlichungstag der Anmeldung: **21.09.2022**
(21) Anmeldenummer: 22155887.7
(22) Anmeldetag: 09.02.2022
(51) Int. Cl.: B60G 11/08, B60G 17/015, B60G 17/019, B60G 17/06, B60G 11/04, F16F 1/00

(54) **ACHSSYSTEM, KRAFTFAHRZEUG MIT ACHSSYSTEM UND VERFAHREN ZUR ERFASSUNG EINER VERFORMUNG**

(30) Priorität: 15.03.2021 DE 102021202471
(71) Anmelder: VOLKSWAGEN AG, 38440 Wolfsburg (DE)
(72) Erfinder: Wolf, Stefan, 38100 Braunschweig (DE); Fiebig, Sierk, 38259 Salzgitter (DE)

(57) **Zusammenfassung**

Die vorliegende Erfindung betrifft ein Achssystem (10) für ein Kraftfahrzeug (100) aufweisend einen Achsgrundkörper (12), wenigstens zwei Radaufhängungsvorrichtungen (14), wenigstens eine Blattfedereinheit (16), wenigstens zwei Dämpfereinheiten (18), eine Rechnereinheit (50) und eine Datenkommunikationsschnittstelle (40), wobei die wenigstens zwei Radaufhängungsvorrichtungen (14) jeweils mit dem Achsgrundkörper (12), der wenigstens einen Blattfedereinheit (16) und mit einer der wenigstens zwei Dämpfereinheiten (18) wirkverbunden sind, wobei die Blattfedereinheit (16) wenigstens eine Sensoreinheit (30) zur Messung einer Verformung der wenigstens einen Blattfedereinheit (16) umfasst und die Datenkommunikationsschnittstelle (40) mit der wenigstens eine Sensoreinheit (30) datenkommunizierend verbunden und zur Kommunikation der gemessenen Verformung an die Rechnereinheit (50) ausgestaltet ist.

Ferner betrifft die Erfindung ein Kraftfahrzeug (100) mit einem Achssystem (10) und ein Verfahren zur Erfassung einer Verformung wenigstens einer Blattfedereinheit (16) eines Achssystems (10) für ein Kraftfahrzeug (100).

## Beschreibung

Die vorliegende Erfindung betrifft ein Achssystem für ein Kraftfahrzeug. Ferner betrifft die Erfindung ein Kraftfahrzeug mit wenigstens einem Achssystem. Auch betrifft die Erfindung ein Verfahren zur Erfassung einer Verformung wenigstens einer Blattfedereinheit eines Achssystems für ein Kraftfahrzeug.

Achssysteme mit Blattfedereinheiten unterliegen im Laufe ihrer Nutzungsdauer Ermüdungserscheinungen, wie beispielsweise isotherme mechanische Ermüdung, thermische und/oder thermomechanische Ermüdung, Kriechermüdung oder tribologische Ermüdung der Bauteile, insbesondere der Blattfedereinheiten und/oder Dämpfereinheit. Die Ermüdung verringert die Leistungsfähigkeit des Bauteils und/oder des Achssystems, wodurch wiederum Qualitätsmerkmale des Achssystems und/oder eines Fahrwerks, wie Fahrgefühl, Komfort und/oder Sicherheit, negativ beeinflusst werden. Die Ermüdung der Bauteile eines Achssystems, insbesondere der Blattfedereinheiten und/oder Dämpfereinheiten, erfolgt zumeist schleichend und unbemerkt und zumeist nicht aufgrund einer oder weniger Einzelsituationen.

Zur Gewährleistung der Funktionalität und Sicherheit eines Achssystems sind daher definierte Wartungsintervalle vorgegeben, in denen einzelne Bauteile des Achssystems und/oder das gesamte Achssystem geprüft und/oder getauscht werden. Alternativ werden Bauteile des Achssystems und/oder das gesamte Achssystem erst nach Auftreten eines Schadens ausgetauscht.

Nachteilig gemein ist es bekannten Achssystemen, dass keine Zustandsüberwachung des Achssystems, insbesondere der Blattfedereinheit und/oder Dämpfereinheiten erfolgt, wodurch Bauteile entweder frühzeitig und damit vor Ausschöpfung des gesamten Leistungspotentials und der gesamten Lebenszeit oder erst nachdem ein Schaden aufgetreten ist ausgetauscht werden. Ferner ist durch die fehlende Zustandsüberwachung keine Anpassung, insbesondere keine dynamische und/oder automatische Anpassung, der Eigenschaften des Achssystems an die Veränderung des Zustands des Achssystems möglich.

Es ist daher Aufgabe der vorliegenden Erfindung, die oben beschriebenen Nachteile im Stand der Technik zu beheben oder zumindest teilweise zu beheben. Insbesondere ist es Aufgabe der Erfindung, ein Achssystem für ein Kraftfahrzeug mit wenigstens einer Blattfedereinheit bereitzustellen, mit dem die Messung einer Verformung der wenigstens einen Blattfedereinheit besonders einfach ermöglicht wird. Insbesondere ist es ferner die Aufgabe der Erfindung ein Kraftfahrzeug mit wenigstens einem Achssystem sowie ein Verfahren zur Erfassung einer Verformung wenigstens einer Blattfedereinheit eines Achssystems für ein Kraftfahrzeug bereitzustellen.

Die voranstehende Aufgabe wird durch die Patentansprüche gelöst. Insbesondere wird die Aufgabe gelöst durch ein Achssystem mit den Merkmalen des unabhängigen Anspruchs 1. Ferner wird die Aufgabe gelöst durch ein Kraftfahrzeug mit den Merkmalen des unabhängigen Anspruchs 7 und durch ein Verfahren mit den Merkmalen des unabhängigen Anspruchs 8. Weitere Vorteile und Details der Erfindung ergeben sich aus den Unteransprüchen, der Beschreibung und den Zeichnungen. Dabei gelten Merkmale, die im Zusammenhang mit dem erfindungsgemäßen Achssystem beschrieben sind, selbstverständlich auch im Zusammenhang mit dem erfindungsgemäßen Kraftfahrzeug, dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch ein Achssystem für ein Kraftfahrzeug aufweisend einen Achsgrundkörper, wenigstens zwei Radaufhängungsvorrichtungen, wenigstens eine Blattfedereinheit, wenigstens zwei Dämpfereinheiten, eine Rechnereinheit und eine Datenkommunikationsschnittstelle, wobei die wenigstens zwei Radaufhängungsvorrichtungen jeweils mit dem Achsgrundkörper, der wenigstens einen Blattfedereinheit und mit einer der wenigstens zwei Dämpfereinheiten wirkverbunden sind, wobei die Blattfedereinheit wenigstens eine Sensoreinheit zur Messung einer Verformung der wenigstens einen Blattfedereinheit umfasst und die Datenkommunikationsschnittstelle mit der wenigstens einen Sensoreinheit datenkommunizierend verbunden und zur Kommunikation der gemessenen Verformung an die Rechnereinheit ausgestaltet ist.

Ziel des erfindungsgemäßen Achssystems ist eine Erfassung von einer Verformung der wenigstens einen Blattfedereinheit, um daraus Rückschlüsse auf mögliche Ermüdungserscheinungen eines Achssystems, insbesondere der wenigstens einen Blattfedereinheit zu ermöglichen. Ein Achssystem ist im Rahmen der Erfindung sowohl für den Einsatz als Vorderachse als auch für den Einsatz als Hinterachse zu verstehen. Die wenigstens eine Blattfedereinheit ist als Längsblattfeder- und/oder als Querblattfedereinheit zu verstehen. Die Messung der Verformung der wenigstens einen Blattfedereinheit ist bevorzugt als Messung einer Dehnung der wenigstens einen Blattfedereinheit in Längsrichtung der Blattfedereinheit zu verstehen. Die Längsrichtung der Blattfedereinheit ergibt sich dabei bevorzugt aus der Haupterstreckungsrichtung der Blattfedern. Die Dämpfereinheiten sind bevorzugt als Stoßdämpfer ausgestaltet. Die Radaufhängungsvorrichtungen dienen der konstruktiven Verbindung mit jeweils wenigstens einem Rad. Auf bekannte konstruktive Details wie beispielsweise Bremsvorrichtungen an den Radaufhängungen wird in dieser Beschreibung für eine verbesserte Übersichtlichkeit verzichtet. Eine Anbindung der Radaufhängungsvorrichtung an den Grundkörper erfolgt bevorzugt über konstruktive Vorrichtungen, wie beispielsweise einen Lenker. Eine Anbindung der Radaufhängungsvorrichtung an jeweils wenigstens Dämpfereinheit und/oder an die wenigstens eine Blattfedereinheit ist bevorzugt als direkte konstruktive Anbindung ausgestaltet.

Die Datenkommunikationsschnittstelle kann die Daten aus den Messungen der Verformung kabellos und/oder kabelgebunden an die Rechnereinheit kommunizieren. Die Sensoreinheit ist datenkommunizierend mit der Datenkommunikationsschnittstelle verbunden. Die Rechnereinheit kann als Rechnereinheit des Kraftfahrzeugs ausgestaltet sein und/oder Bestandteil eines Rechnersystems des Kraftfahrzeugs sein. Alternativ oder zusätzlich kann das Achssystem eine eigene Rechnereinheit aufweisen. Bevorzugt ist die Rechnereinheit des Achssystems zur Datenkommunikation mit dem Kraftfahrzeug, insbesondere mit einem Steuersystem des Kraftfahrzeugs, ausgestaltet. Alternativ oder zusätzlich kann die Rechnereinheit zur Datenkommunikation mit einem Server, einem Wartungsbetrieb und/oder einem Hersteller ausgestaltet sein.

Ein Achssystem und/oder eine Blattfedereinheit weist in seinem/ihrem Herstellungszustand ein/eine messbare Charakteristik auf. Der ursprüngliche Zustand des Achssystems und/oder der Blattfedereinheit kann folglich in Messkurven und/oder Tabellen erfasst werden. Beispielsweise wird eine Messkurve der Verformung, insbesondere der Dehnung in Längsrichtung, der wenigstens einen Blattfedereinheit in ihrem Herstellungszustand über dem Höhenstand der wenigstens zwei Radaufhängungsvorrichtungen erfasst. Beispielsweise ist eine auftretende Ermüdungserscheinung von Bauteilen des Achssystems, insbesondere von den wenigstens zwei Dämpfereinheiten und/oder der wenigstens einen Blattfedereinheit, durch Messungen der Verformung der wenigstens einen Blattfedereinheit erfassbar. Somit ist eine Zustandsanalyse des Achssystems und/oder der Bauteile des Achssystems durch das erfindungsgemäße Achssystem und die Messung einer Verformung der wenigstens einen Blattfedereinheit ermöglicht. Bevorzugt wird durch das erfindungsgemäße Achssystem eine Langzeiterfassung der Verformung der wenigstens einen Blattfedereinheit über die Zeit ermöglicht.

Ein derart ausgestaltetes Achssystem ist besonders vorteilhaft, da die Messung und Erfassung einer Verformung der wenigstens einen Blattfedereinheit besonders einfach ermöglicht wird, wobei die Daten der Messung vorteilhaft an eine Rechnereinheit kommuniziert werden.

Gemäß einer bevorzugten Weiterentwicklung der Erfindung kann bei einem Achssystem vorgesehen sein, dass die wenigstens eine Blattfedereinheit zumindest abschnittsweise faserverstärktes Material, insbesondere glas- und/oder carbonfaserverstärktes Material, umfasst. Eine erfindungsgemäße Blattfedereinheit ist besonders vorteilhaft, wenn diese aus glas- und/oder carbonfaserverstärktem Kunststoff ausgestaltet ist. Eine Blattfedereinheit aus glas- und/oder carbonfaserverstärktem Kunststoff weist vorteilhafte konstruktive Eigenschaften in Bezug auf Festigkeit, Gewicht, Dehnung, Verschleiß- und Fehlverhalten auf.

Gemäß einer bevorzugten Weiterentwicklung der Erfindung kann bei einem Achssystem vorgesehen sein, dass die wenigstens eine Sensoreinheit an einer Oberfläche der wenigstens einen Blattfedereinheit und/oder zumindest abschnittsweise in der wenigstens einen Blattfedereinheit angeordnet ist und/oder dass die wenigstens eine Sensoreinheit als mechanischer Dehnungsmesstreifen und/oder als optischer Fasersensor ausgestaltet ist. Eine Anordnung der erfindungsgemäßen Sensoreinheit an einer Oberfläche, also außerhalb, der wenigstens einen Blattfedereinheit stellt eine besonders einfache und kostengünstige Ausgestaltung der Anbringung dar. Eine Anordnung der wenigstens einen Sensoreinheit zumindest abschnittsweise in der wenigstens einen Blattfedereinheit ermöglicht vorteilhaft eine erhöhte Lebensdauer der wenigstens einen Sensoreinheit aufgrund eines Schutzes der wenigstens einen Sensoreinheit vor äußeren Einflüssen, wie beispielsweise Steinschlägen, Schmutz und/oder Feuchtigkeit. Insbesondere in Verbindung mit einer Blattfedereinheit aus faserverstärktem Material kann die erfindungsgemäße Sensoreinheit in die wenigstens eine Blattfedereinheit einlaminiert sein und somit zwischen die Faserlagen und in die Matrix der Blattfedereinheit eingebettet sein.

Eine erfindungsgemäße Sensoreinheit ist bevorzugt als Messstreifen zu verstehen. Ein Messstreifen kann als mechanischer Dehnungsmessstreifen und/oder als optischer Fasersensor ausgestaltet sein. Für die Ausgestaltung als optischer Fasersensor ist bevorzugt eine Lichteinleitungsvorrichtung, wenigstens ein Faser-Bragg-Gitter, eine Linse und/oder wenigstens ein Interrogator des Achssystems vorgesehen. Der wenigstens eine Interrogator erfasst als optoelektronisches Instrument ein Licht, insbesondere ein reflektiertes Licht, einer Lichteinleitungsvorrichtung, dass zumindest abschnittsweise durch wenigstens eine Faser der und/oder in der und/oder an der wenigstens einen Blattfedereinheit geleitet worden ist und ermöglicht eine Auswertung zur Dehnung, Temperatur, Verschiebung, Verwindung und/oder Belastung der wenigstens einen Blattfedereinheit. Der wenigstens eine Interrogator ist bevorzugt in seiner Erfassungsfrequenz einstellbar ausgestaltet. Ein derart ausgestaltetes Achssystem ist besonders vorteilhaft, da eine Messung und/oder Erfassung der Verformung der wenigstens einen Blattfedereinheit besonders genau ermöglicht wird.

Gemäß einer bevorzugten Weiterentwicklung der Erfindung kann bei einem Achssystem vorgesehen sein, dass die Rechnereinheit eine Speichereinheit umfasst, wobei die Speichereinheit zur Speicherung der erfassten Verformung über die Zeit ausgestaltet ist und/oder dass die Rechnereinheit zum Vergleich der erfassten Verformung mit wenigstens einem Soll-Wert ausgestaltet ist. Insbesondere für eine Erfassung und/oder Messung der Verformung der wenigstens einen Blattfedereinheit ist eine Speichereinheit besonders vorteilhaft. Ein Vergleich der erfassten Verformung mit wenigstens einem Soll-Wert durch die Rechnereinheit ist im Rahmen der Erfindung bevorzugt als eine Auswertung und/oder ein Vergleich des erfassten Ist-Zustands der wenigstens einen Blattfedereinheit mit beispielsweise den zuvor beschrieben Ursprungswerten der wenigstens einen Blattfedereinheit. Beispielsweise ist in der Rechnereinheit wenigstens ein Grenzwert als Soll-Wert hinterlegt, wobei bei Erreichen, Überschreiten und/oder Unterschreiten des Grenzwerts durch die gemessene Verformung der wenigstens einen Blattfedereinheit ein Signal durch die Rechnereinheit ausgegeben und/oder ein Prozess zur Wartungsinitiierung gestartet wird. Vorteilhafterweise ist die Rechnereinheit dafür wie zuvor beschrieben datenkommunizierend mit dem Kraftfahrzeugsystem, einem Steuergerät und/oder einer Ausgabeeinheit verbunden. Eine Speichereinheit stellt eine besonders vorteilhafte Ergänzung für das erfindungsgemäße Achssystem und/oder die Rechnereinheit dar, da mit einfachen und kostengünstigen Mitteln eine Speicherung und damit verbesserte Auswertung der gemessenen und/oder erfassten Verformung ermöglicht wird.

Gemäß einer bevorzugten Weiterentwicklung der Erfindung kann bei einem Achssystem vorgesehen sein, dass die wenigstens zwei Dämpfereinheiten jeweils eine Stellvorrichtung zur Einstellung der Dämpferkraft der Dämpfereinheiten umfassen, wobei die Rechnereinheit zur Regelung der Dämpferkraft der Dämpfereinheiten durch die Stellvorrichtungen, insbesondere auf Basis der erfassten Verformung, ausgestaltet ist. Die wenigstens zwei Dämpfereinheiten und die wenigstens eine Blattfedereinheit weisen in dem erfindungsgemäßen Achssystem eine Wechselwirkung für die Stabilität des Achssystems auf. Eine Anpassungsmöglichkeit von den Dämpfereinheiten durch die Stellvorrichtungen ist grundsätzlich bekannt. Vorteilhaft ist die Weiterentwicklung der Erfindung durch die Regelung, insbesondere durch die automatische Regelung, der Dämpferkraft durch die Rechnereinheit mittels der Stellvorrichtungen, insbesondere auf Basis der erfassten Verformung. Beispielsweise regelt ein erfindungsgemäßes Achssystem die Dämpferkraft nach und erhöht diese, weil es einen Alterungsprozess und somit eine erhöhte Verformung der wenigstens einen Blattfedereinheit gemessen hat. Ein derart ausgestaltetes Achssystem ist besonders vorteilhaft, da mit einfachen und kostengünstigen Mitteln eine Regelung der Dämpferkraft durch die Rechnereinheit mittels der Stellvorrichtungen, insbesondere auf Basis der erfassten Verformung, ermöglicht wird. Bevorzugt wird somit eine automatische Regelung und/oder Anpassung der Eigenschaften des Achssystems an die Veränderung des Zustands des Achssystems ermöglicht. Ein erfindungsgemäßes Achssystem ermöglicht somit eine Reduzierung und/oder einen Ausgleich der Auswirkungen eines Alterungsprozesses der Bauteile des Achssystems, insbesondere der Dämpfereinheiten und/oder der wenigstens einen Blattfedereinheit durch die Regelung.

Gemäß einer bevorzugten Weiterentwicklung der Erfindung kann bei einem Achssystem vorgesehen sein, dass die Blattfedereinheit mit jeder der wenigstens zwei Radaufhängungsvorrichtungen und/oder dem Achsgrundkörper jeweils durch eine Verbindungsvorrichtung verbunden ist, insbesondere, wobei die Verbindungsvorrichtung an der Blattfedereinheit lösbar befestigbar und/oder entlang einer Haupterstreckungsachse der Blattfedereinheit verschiebbar ausgestaltet ist. Eine Verbindungsvorrichtung ist im Rahmen der Erfindung als Kraftübertragungsvorrichtung zwischen den Vorrichtungen zu verstehen. Beispielsweise kann eine Verbindungsvorrichtung als Schraubverbindung, Pressverbindung und/oder anderweitige Verbindungsvorrichtung ausgestaltet sein. Zusätzlich oder alternativ zu der Einstellung der Dämpferkraft durch jeweils eine Stellvorrichtung ist es besonders vorteilhaft, wenn das Achssystem derart anpassbar ist, dass die zuvor beschriebenen Verbindungsvorrichtungen an der Blattfedereinheit lösbar befestigbar und/oder entlang einer Haupterstreckungsachse der Blattfedereinheit verschiebbar ausgestaltet ist. Eine lösbare Befestigung der Verbindungvorrichtung und/oder eine Verschiebbarkeit der Verbindungsvorrichtung entlang einer Haupterstreckungsachse der Blattfedereinheit ermöglicht eine Verschiebung des Kraftübertragungspunkts von und/oder auf die wenigstens eine Blattfedereinheit. Durch eine Verschiebung des Kraftübertragungspunkts wird vorteilhaft eine Anpassung der Eigenschaften des Achssystems ermöglicht.

Gemäß einem zweiten Aspekt der Erfindung wird die Aufgabe durch ein Kraftfahrzeug mit einem Achssystem gemäß dem ersten Aspekt gelöst. Bei dem beschriebenen Kraftfahrzeug ergeben sich sämtliche Vorteile, die bereits zu dem Achssystem gemäß dem ersten Aspekt der Erfindung beschrieben worden sind. Ein derart ausgestaltetes Kraftfahrzeug ist besonders vorteilhaft, da die Messung und Erfassung einer Verformung der wenigstens einen Blattfedereinheit besonders einfach ermöglicht wird, wobei die Daten der Messung vorteilhaft an eine Rechnereinheit des Achssystems kommunizierbar sind.

Gemäß einem dritten Aspekt der Erfindung wird die Aufgabe durch ein Verfahren zur Erfassung einer Verformung wenigstens einer Blattfedereinheit eines Achssystems für ein Kraftfahrzeug gelöst. Das Verfahren weist die folgenden Verfahrensschritte auf:
- Messen einer Verformung der wenigstens einen Blattfedereinheit durch eine Sensoreinheit des Achssystems,
- Zur Erfassung der Verformung Kommunikation der gemessenen Verformung durch eine Datenkommunikationsschnittstelle des Achssystems an eine Rechnereinheit des Achssystems.

In einem ersten Verfahrensschritt wird die Verformung der wenigstens einen Blattfedereinheit durch eine Sensoreinheit des Achssystems gemessen. In einem zweiten Verfahrensschritt wird die gemessene Verformung zur Erfassung der Verformung durch eine

Datenkommunikationsschnittstelle des Achssystems an eine Rechnereinheit des Achssystems kommuniziert. Somit wird durch das erfindungsgemäße Verfahren eine Verformung der wenigstens einen Blattfedereinheit gemessen und an eine Rechnereinheit übertragen. Ein erfindungsgemäßes Verfahren ist besonders vorteilhaft, da die Messung und Erfassung einer Verformung, der wenigstens einen Blattfedereinheit besonders einfach ermöglicht wird. Vorzugsweise kann das erfindungsgemäße Verfahren ferner eine Auswertung der erfassten Verformung und/oder eine Ausgabe und/oder ein Senden der erfassten Verformung umfassen. Die zuvor und die im Nachfolgenden beschrieben Verfahrensschritte können, wenn nicht explizit anderweitig angegeben, einzeln, zusammen, einfach, mehrfach, zeitlich parallel und/oder nacheinander in beliebiger Reihenfolge ausgeführt werden. Eine Benennung als beispielsweise "erster Verfahrensschritt" und "zweiter Verfahrensschritt" bedingt keine zeitliche Reihenfolge und/oder Priorisierung.

Gemäß einer bevorzugten Weiterentwicklung der Erfindung kann bei einem Verfahren vorgesehen sein, dass das Achssystem nach dem ersten Aspekt ausgestaltet ist. Bei dem beschriebenen Verfahren ergeben sich somit sämtliche Vorteile, die bereits zu dem Achssystem gemäß dem ersten Aspekt der Erfindung beschrieben worden sind.

Gemäß einer bevorzugten Weiterentwicklung der Erfindung kann bei einem Verfahren vorgesehen sein, dass das Verfahren ferner wenigstens einen der folgenden Verfahrensschritte umfasst:
- Speicherung der erfassten Verformung über die Zeit durch eine Speichereinheit der Rechnereinheit,
- Vergleich der erfassten Verformung mit wenigstens einem Soll-Wert durch die Rechnereinheit,
- Einstellung der Dämpferkraft wenigstens einer Dämpfereinheit des Achssystems durch eine Stellvorrichtung der Dämpfereinheit,
- Regelung der Einstellung durch die Stellvorrichtung durch die Rechnereinheit auf Basis der erfassten Verformung.

In dem Verfahrensschritt der Speicherung wird die erfasste Verformung über die Zeit durch eine Speichereinheit der Rechnereinheit gespeichert. Eine Speicherung der Verformung ist als Speicherung der Daten der Verformung zu verstehen. Eine Speicherung der Verformung ist besonders vorteilhaft für das erfindungsgemäße Verfahren, da mit einfachen und kostengünstigen Mitteln eine Speicherung und damit eine verbesserte Auswertung der gemessenen und/oder erfassten Verformung ermöglicht wird. In einem weiteren Verfahrensschritt wird die Dämpferkraft wenigstens einer Dämpfereinheit des Achssystems durch eine Stellvorrichtung der Dämpfereinheit eingestellt. Eine Einstellung der Dämpferkraft ist besonders vorteilhaft, da beispielsweise ein Alterungsprozess der Blattfedereinheit ausgeglichen oder im Wesentlichen ausgeglichen werden kann. Insbesondere kann die Qualität des Achssystems, wie beispielsweise die Fahrdynamik, die Fahrsicherheit und/oder der Komfort durch ein derart ausgestaltetes Verfahren vorteilhaft aufrechterhalten, sichergestellt und/oder ermöglicht werden. Die Formulierung "X oder im Wesentlichen X" soll im Rahmen der Erfindung als mögliche, geringe Abweichung, beispielsweise aufgrund von Fertigungstoleranzen, Material- und/oder Prozesseigenschaften verstanden werden, ohne die zu Grunde liegende, beabsichtigte Funktion des Merkmals zu verändern. In einem weiteren Verfahrensschritt wird die erfasste Verformung mit wenigstens einem Soll-Wert durch die Rechnereinheit verglichen. Beispielsweise ist in der Rechnereinheit wenigstens ein Grenzwert als Soll-Wert hinterlegt, wobei bei Erreichen, Überschreiten und/oder Unterschreiten des Grenzwerts durch die gemessene Verformung der wenigstens einen Blattfedereinheit ein Signal durch die Rechnereinheit ausgegeben und/oder ein Prozess zur Wartungsinitiierung gestartet wird. Vorteilhafterweise ist die Rechnereinheit dafür wie zuvor beschrieben datenkommunizierend mit dem Kraftfahrzeugsystem, einem Steuergerät und/oder einer Ausgabeeinheit verbunden. In einem weiteren Verfahrensschritt wird die Einstellung durch die Stellvorrichtung durch die Rechnereinheit auf Basis der erfassten Verformung geregelt. Beispielsweise regelt eine erfindungsgemäße Rechnereinheit des Achssystems die Dämpferkraft nach und erhöht diese, weil es einen Alterungsprozess und somit eine erhöhte Verformung der wenigstens einen Blattfedereinheit gemessen hat. Ein derart ausgestaltetes Verfahren ist besonders vorteilhaft, da mit einfachen und kostengünstigen Mitteln eine Regelung der Dämpferkraft durch die Rechnereinheit mittels der Stellvorrichtung, insbesondere auf Basis der erfassten Verformung, ermöglicht wird.

Ein erfindungsgemäßes Achssystem, ein erfindungsgemäßes Kraftfahrzeug sowie ein erfindungsgemäßes Verfahren werden nachfolgend anhand von Zeichnungen näher erläutert. Es zeigen jeweils schematisch:
- Figur 1: in einer Draufsicht ein erfindungsgemäßes Achssystem mit zwei Radaufhängungsvorrichtungen, einer Blattfedereinheit und zwei Dämpfereinheiten sowie einer Rechnereinheit,
- Figur 2: in einer Seitenansicht ein erfindungsgemäßes Kraftfahrzeug mit einem Achssystem, und
- Figur 3: in einem Flussdiagramm ein erfindungsgemäßes Verfahren.

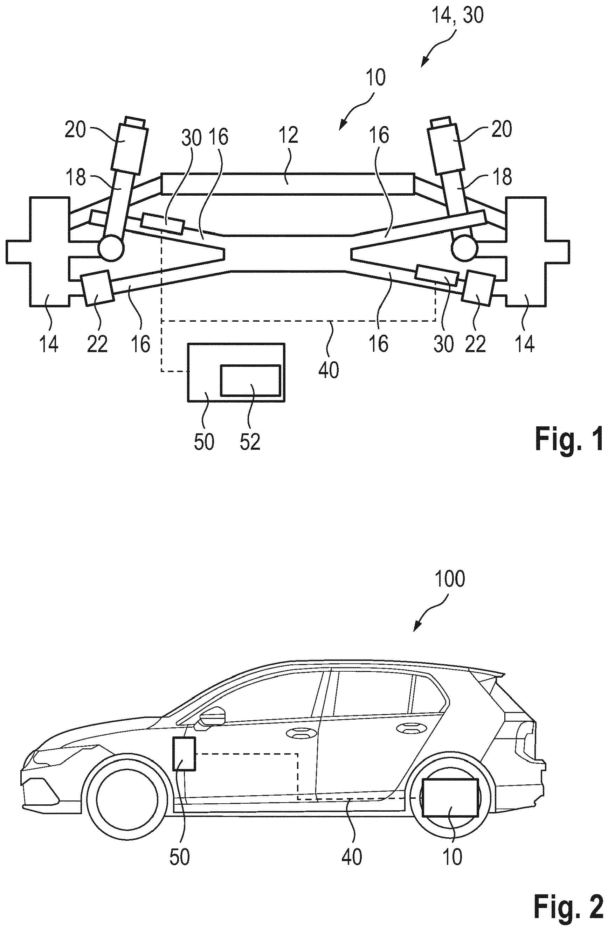

Elemente mit gleicher Funktion und Wirkungsweise sind in den Fig. 1 bis 3 jeweils mit denselben Bezugszeichen versehen.

In Fig. 1 ist in einer Draufsicht von hinten ein erfindungsgemäßes Achssystem 10 mit zwei Radaufhängungsvorrichtungen 14, einer Blattfedereinheit 16 und zwei Dämpfereinheiten 18 sowie einer Rechnereinheit 50 mit einer Speichereinheit 52 gezeigt. Das erfindungsgemäße Achssystem 10 für ein Kraftfahrzeug 100 (nicht gezeigt) weist einen Achsgrundkörper 12, zwei Radaufhängungsvorrichtungen 14, eine Blattfedereinheit 16, zwei Dämpfereinheiten 18, eine Rechnereinheit 50 mit einer Speichereinheit 52 und eine Datenkommunikationsschnittstelle 40 auf. Die zwei Radaufhängungsvorrichtungen 14 sind jeweils mit dem Achsgrundkörper 12, der Blattfedereinheit 16 und mit einer der zwei Dämpfereinheiten 18 wirkverbunden. Die dargestellte Blattfedereinheit 16 umfasst zwei Sensoreinheiten 30 zur Messung einer Verformung der Blattfedereinheit 16 an zwei Stellen. Die Datenkommunikationsschnittstelle 40 ist mit der den Sensoreinheiten 30 datenkommunizierend verbunden und zur Kommunikation der gemessenen Verformung an die Rechnereinheit 50 ausgestaltet. Die Blattfedereinheit 16 ist aus zwei Querblattfedern ausgestaltet. Die Sensoreinheiten 30 sind zumindest abschnittsweise in der der Blattfedereinheit 16 angeordnet. Die zwei Dämpfereinheiten 18 umfassen jeweils eine Stellvorrichtung 20 zur Einstellung der Dämpferkraft der Dämpfereinheiten 18, wobei die Rechnereinheit 50 zur Regelung der Dämpferkraft der Dämpfereinheiten 18 durch die Stellvorrichtungen 20 auf Basis der erfassten Verformung ausgestaltet ist. Die Blattfedereinheit 16 ist mit jeder der zwei Radaufhängungsvorrichtungen 14 durch eine Verbindungsvorrichtung 22 verbunden, wobei die Verbindungsvorrichtung 22 an der Blattfedereinheit 16 lösbar befestigt und entlang einer Haupterstreckungsachse der Blattfedereinheit 16 verschiebbar ausgestaltet ist.

In Fig. 2 ist in einer Seitenansicht ein erfindungsgemäßes Kraftfahrzeug 100 mit einem Achssystem 10 gezeigt. Die Rechnereinheit 50 des Achssystems 10 ist beabstandet von dem Achsgrundkörper 12 (nicht gezeigt) angeordnet und über die Datenkommunikationsschnittstelle 40 datenkommunizierend mit einer Sensoreinheit 30 (nicht gezeigt) des Achssystems 10 verbunden. Ein derart ausgestaltetes Kraftfahrzeug 100 ist besonders vorteilhaft, da die Messung 202 (nicht gezeigt) und Erfassung einer Verformung der wenigstens einen Blattfedereinheit 16 (nicht gezeigt) besonders einfach ermöglicht wird, wobei die Daten der Messung 202 (nicht gezeigt) vorteilhaft an die Rechnereinheit 50 kommunizierbar sind.

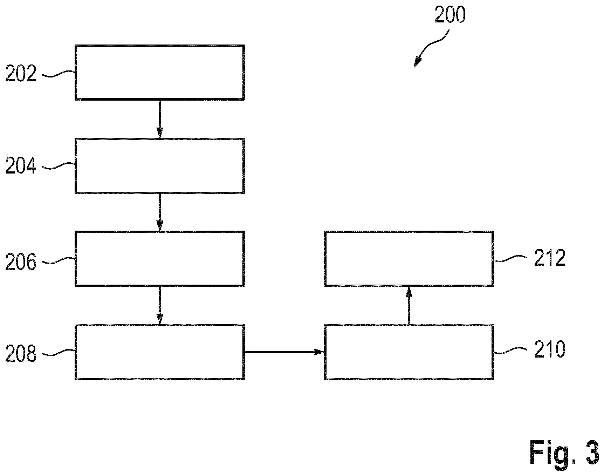

In Fig. 3 ist in einem Flussdiagramm ein erfindungsgemäßes Verfahren 200 gezeigt. In einem ersten Verfahrensschritt wird die Verformung der wenigstens einen Blattfedereinheit 16 (nicht gezeigt) durch eine Sensoreinheit 30 (nicht gezeigt) des Achssystems 10 (nicht gezeigt) gemessen 202. In einem zweiten Verfahrensschritt wird die gemessene Verformung zur Erfassung der Verformung durch eine Datenkommunikationsschnittstelle 40 (nicht gezeigt) des Achssystems 10 (nicht gezeigt) an eine Rechnereinheit 50 (nicht gezeigt) des Achssystems 10 (nicht gezeigt) kommuniziert. Somit wird durch das erfindungsgemäße Verfahren 200 eine Verformung der wenigstens einen Blattfedereinheit 16 (nicht gezeigt) gemessen und an eine Rechnereinheit 50 (nicht gezeigt) übertragen. Ein erfindungsgemäßes Verfahren 200 ist besonders vorteilhaft, da die Messung 202 und Erfassung einer Verformung der wenigstens einen Blattfedereinheit 16 (nicht gezeigt) besonders einfach ermöglicht wird. In dem Verfahrensschritt der Speicherung 206 wird die erfasste Verformung über die Zeit durch eine Speichereinheit 52 (nicht gezeigt) der Rechnereinheit 50 (nicht gezeigt) gespeichert. Eine Speicherung 206 der Verformung ist besonders vorteilhaft für das erfindungsgemäße Verfahren 200, da mit einfachen und kostengünstigen Mitteln eine Speicherung 206 und damit eine verbesserte Auswertung der gemessenen und/oder erfassten Verformung ermöglicht wird. In einem weiteren Verfahrensschritt wird die Dämpferkraft wenigstens einer Dämpfereinheit 18 (nicht gezeigt) des Achssystems 10 (nicht gezeigt) durch eine Stellvorrichtungen 20 (nicht gezeigt) der Dämpfereinheit 18 (nicht gezeigt) eingestellt 208. Eine Einstellung 208 der Dämpferkraft ist besonders vorteilhaft, da beispielsweise ein Alterungsprozess der Blattfedereinheit 16 (nicht gezeigt) ausgeglichen werden kann. In einem weiteren Verfahrensschritt wird die erfasste Verformung mit wenigstens einem Soll-Wert durch die Rechnereinheit 50 (nicht gezeigt) verglichen 212. Beispielsweise ist in der Rechnereinheit 50 (nicht gezeigt) wenigstens ein Grenzwert als Soll-Wert hinterlegt, wobei bei Erreichen, Überschreiten und/oder Unterschreiten des Grenzwerts durch die gemessene Verformung der wenigstens einen Blattfedereinheit 16 (nicht gezeigt) ein Signal durch die Rechnereinheit 50 (nicht gezeigt) ausgegeben und/oder ein Prozess zur Wartungsinitiierung gestartet wird. In einem weiteren Verfahrensschritt wird die Einstellung 208 durch die Stellvorrichtungen 20 (nicht gezeigt) durch die Rechnereinheit 50 (nicht gezeigt) auf Basis der erfassten Verformung geregelt 210. Beispielsweise regelt 210 eine erfindungsgemäße Rechnereinheit 50 (nicht gezeigt) des Achssystems 10 (nicht gezeigt) die Dämpferkraft nach und erhöht diese, weil es einen Alterungsprozess und somit eine erhöhte Verformung der wenigstens einen Blattfedereinheit 16 (nicht gezeigt) gemessen hat. Ein derart ausgestaltetes Verfahren 200 ist besonders vorteilhaft, da mit einfachen und kostengünstigen Mitteln eine Regelung 210 der Dämpferkraft durch die Rechnereinheit 50 (nicht gezeigt) mittels der Stellvorrichtungen 20 (nicht gezeigt), insbesondere auf Basis der erfassten Verformung, ermöglicht wird.

### Bezugszeichenliste

- 10: Achssystem
- 12: Achsgrundkörper
- 14: Radaufhängungsvorrichtung
- 16: Blattfedereinheit
- 18: Dämpfereinheit
- 20: Stellvorrichtungen
- 22: Verbindungsvorrichtung

- 30: Sensoreinheit

- 40: Datenkommunikationsschnittstelle

- 50: Rechnereinheit
- 52: Speichereinheit

- 100: Kraftfahrzeug

- 200: Verfahren
- 202: Messen
- 204: Kommunikation
- 206: Speicherung
- 208: Einstellung
- 210: Regelung
- 212: Vergleich

## Patentansprüche

1. Achssystem (10) für ein Kraftfahrzeug (100) aufweisend einen Achsgrundkörper (12), wenigstens zwei Radaufhängungsvorrichtungen (14), wenigstens eine Blattfedereinheit (16), wenigstens zwei Dämpfereinheiten (18), eine Rechnereinheit (50) und eine Datenkommunikationsschnittstelle (40), wobei die wenigstens zwei Radaufhängungsvorrichtungen (14) jeweils mit dem Achsgrundkörper (12), der wenigstens einen Blattfedereinheit (16) und mit einer der wenigstens zwei Dämpfereinheiten (18) wirkverbunden sind,
**dadurch gekennzeichnet,**
**dass** die Blattfedereinheit (16) wenigstens eine Sensoreinheit (30) zur Messung einer Verformung der wenigstens einen Blattfedereinheit (16) umfasst und die Datenkommunikationsschnittstelle (40) mit der wenigstens einen Sensoreinheit (30) datenkommunizierend verbunden und zur Kommunikation der gemessenen Verformung an die Rechnereinheit (50) ausgestaltet ist.

2. Achssystem (10) nach Anspruch 1,
**dadurch gekennzeichnet,**
**dass** die wenigstens eine Blattfedereinheit (16) zumindest abschnittsweise faserverstärktes Material, insbesondere glas- und/oder carbonfaserverstärktes Material, umfasst.

3. Achssystem (10) nach einem der vorangehenden Ansprüche,
**dadurch gekennzeichnet,**
**dass** die wenigstens eine Sensoreinheit (30) an einer Oberfläche der wenigstens einen Blattfedereinheit (16) und/oder zumindest abschnittsweise in der wenigstens einen Blattfedereinheit (16) angeordnet ist und/oder
**dass** die wenigstens eine Sensoreinheit (30) als mechanischer Dehnungsmesstreifen und/oder als optischer Fasersensor ausgestaltet ist.

4. Achssystem (10) nach einem der vorangehenden Ansprüche,
**dadurch gekennzeichnet,**
**dass** die Rechnereinheit (50) eine Speichereinheit (52) umfasst, wobei die Speichereinheit (52) zur Speicherung der erfassten Verformung über die Zeit ausgestaltet ist und/oder dass die Rechnereinheit (50) zum Vergleich der erfassten Verformung mit wenigstens einem Soll-Wert ausgestaltet ist.

5. Achssystem (10) nach einem der vorangehenden Ansprüche,
**dadurch gekennzeichnet,**
**dass** die wenigstens zwei Dämpfereinheiten (18) jeweils eine Stellvorrichtung (20) zur Einstellung der Dämpferkraft der Dämpfereinheiten (18) umfassen, wobei die Rechnereinheit (50) zur Regelung der Dämpferkraft der Dämpfereinheiten (18) durch die Stellvorrichtungen (20), insbesondere auf Basis der erfassten Verformung, ausgestaltet ist.

6. Achssystem (10) nach einem der vorangehenden Ansprüche,
**dadurch gekennzeichnet,**
**dass** die Blattfedereinheit (16) mit jeder der wenigstens zwei Radaufhängungsvorrichtungen (14) und/oder dem Achsgrundkörper (12) jeweils durch eine Verbindungsvorrichtung (22) verbunden ist, insbesondere wobei die Verbindungsvorrichtung (22) an der Blattfedereinheit (16) lösbar befestigbar und/oder entlang einer Haupterstreckungsachse der Blattfedereinheit (16) verschiebbar ausgestaltet ist.

7. Kraftfahrzeug (100), aufweisend wenigstens ein Achssystem (10),
**dadurch gekennzeichnet,**
**dass** Achssystem (10) nach einem der vorangehenden Ansprüche ausgestaltet ist.

8. Verfahren (200) zur Erfassung einer Verformung wenigstens einer Blattfedereinheit (16) eines Achssystems (10) für ein Kraftfahrzeug (100), das Verfahren (200) aufweisend die folgenden Verfahrensschritte:
- Messen (202) einer Verformung der wenigstens einen Blattfedereinheit (16) durch eine Sensoreinheit (30) des Achssystems (10),
- Zur Erfassung der Verformung Kommunikation (204) der gemessenen Verformung durch eine Datenkommunikationsschnittstelle (40) des Achssystems (10) an eine Rechnereinheit (50) des Achssystems (10).

9. Verfahren (200) nach Anspruch 8,
**dadurch gekennzeichnet,**
**dass** das Achssystems (10) nach einem der Ansprüche 1 bis 7 ausgestaltet ist.

10. Verfahren (200) nach Anspruch 8 oder 9,
**dadurch gekennzeichnet,**
**dass** das Verfahren (200) ferner wenigstens einen der folgenden Verfahrensschritte umfasst:
- Speicherung (206) der erfassten Verformung über die Zeit durch eine Speichereinheit (52) der Rechnereinheit (50),
- Vergleich (212) der erfassten Verformung mit wenigstens einem Soll-Wert durch die Rechnereinheit (50),
- Einstellung (208) der Dämpferkraft wenigstens einer Dämpfereinheit (18) des Achssystems (10) durch eine Stellvorrichtung (20) der Dämpfereinheit (18),
- Regelung (210) der Einstellung (208) durch die Stellvorrichtung (20) durch die Rechnereinheit (50) auf Basis der erfassten Verformung.
